(19) Europäisches Patentamt
European Patent Office
Office européen des brevets

(11) EP 4 502 049 A1

(12) EUROPEAN PATENT APPLICATION
published in accordance with Art. 153(4) EPC

(43) Date of publication:
**05.02.2025 Bulletin 2025/06**

(21) Application number: **23780824.1**

(22) Date of filing: **30.03.2023**

(51) International Patent Classification (IPC):
***C08L 29/04** (2006.01)* ***B32B 27/28** (2006.01)*
***C08K 3/22** (2006.01)* ***C08L 23/08** (2025.01)*

(52) Cooperative Patent Classification (CPC):
**C08K 3/22; B32B 27/28; C08F 216/06; C08J 3/201; C08K 3/11; C08L 23/08; C08L 29/04;**
C08J 2329/04; C08K 2003/2241

(86) International application number:
**PCT/JP2023/013065**

(87) International publication number:
**WO 2023/190816 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022057029**

(71) Applicant: **Mitsubishi Chemical Corporation**
**Tokyo 100-8251 (JP)**

(72) Inventor: **MATSUI, Satoshi**
**Tokyo 100-8251 (JP)**

(74) Representative: **Hoffmann Eitle**
**Patent- und Rechtsanwälte PartmbB**
**Arabellastraße 30**
**81925 München (DE)**

# (54) MODIFIED ETHYLENE-VINYL ALCOHOL COPOLYMER COMPOSITION, PELLETS, MULTILAYER STRUCTURE, METHOD FOR PRODUCING MODIFIED ETHYLENE-VINYL ALCOHOL COPOLYMER COMPOSITION, AND METHOD FOR PRODUCING MULTILAYER STRUCTURE

(57) A modified ethylene-vinyl alcohol copolymer composition that allows thermal degradation to be suppressed during heating in melt kneading, melt molding, or the like is provided as follows. A modified ethylene-vinyl alcohol copolymer composition contains a modified ethylene-vinyl alcohol copolymer having a primary hydroxyl group structural unit in a side chain, and a titanium compound. The amount of the titanium compound on a metal basis is 0.001 ppm or more and less than 5 ppm per mass of the modified ethylene-vinyl alcohol copolymer composition.



Processed by Luminess, 75001 PARIS (FR)

## Description

TECHNICAL FIELD

The present disclosure relates to a modified ethylene-vinyl alcohol copolymer composition, pellets, a multilayer structure, a method for producing a modified ethylene-vinyl alcohol copolymer composition, and a method for producing a multilayer structure.

BACKGROUND ART

An ethylene-vinyl alcohol copolymer (which hereinafter may be referred to as "EVOH resin") is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

The EVOH resin is often subjected to a heat stretching process for the purpose of deformation into practical containers or improvement of its mechanical strength and the like. In recent years, when containers are formed from multilayer sheets containing the EVOH resin, deep containers are also produced for more variety and design container shapes. There has been a demand for an EVOH resin with excellent heat-stretchability that provides molded containers with good appearance, barrier properties, and strength even when such deep containers are molded.

Regarding the above problem, for example, JP-A-2004-359965 discloses a modified EVOH resin having a particular structural unit as an EVOH resin with excellent heat-stretchability.

SUMMARY

PROBLEMS TO BE SOLVED BY THE DISCLOSURE

Unfortunately, the modified EVOH resin disclosed in the above JP-A-2004-359965 is insufficient in improving effects concerning long-run formability, such as suppressing degradation during heating in melt kneading, melt molding, and the like. There is a demand for a modified EVOH resin composition that is less likely to be thermally degraded during heating and produces a high-quality molded article.

In view of such a background, the present disclosure provides a modified EVOH resin composition that allows thermal degradation to be suppressed during heating in melt kneading, melt molding, and the like.

MEANS FOR SOLVING THE PROBLEMS

In view of such a situation, the inventor of the present disclosure has found that a modified EVOH resin composition that allows thermal degradation to be suppressed can be obtained by adding a particular minute amount of a titanium compound in a modified EVOH resin having a primary hydroxyl group structural unit in a side chain.

Specifically, the present disclosure has the following aspects.

[1] A modified EVOH resin composition comprising: a modified EVOH resin having a primary hydroxyl group structural unit in a side chain; and a titanium compound, wherein the amount of the titanium compound on a metal basis is 0.001 ppm or more and less than 5 ppm per mass of the modified EVOH resin composition.

[2] The modified EVOH resin composition according to [1], wherein the modified EVOH resin has an ethylene structural unit content of 20 to 60 mol%.

[3] The modified EVOH resin composition according to [1] or [2], wherein a modification rate of the primary hydroxyl group structural unit in a side chain in the modified EVOH resin is 0.1 to 30 mol%.

[4] The modified EVOH resin composition according to any one of [1] to [3], wherein the primary hydroxyl group structural unit in a side chain in the modified EVOH resin is represented by the following general formula (1):

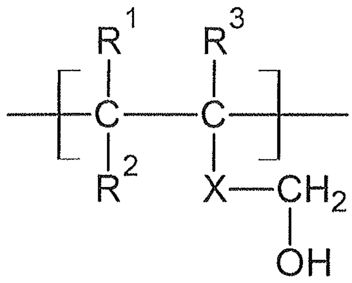

... (1)

where $R^1$ to $R^3$ each independently represent a hydrogen bond or an organic group, and X represents a single bond or a bonding chain.

[5] Pellets comprising the modified EVOH resin composition according to any one of [1] to [4].

[6] A multilayer structure comprising at least one layer comprising the modified EVOH resin composition according to any one of [1] to [4].

[7] A method for producing the modified EVOH resin composition according to any one of [1] to [4], the method comprising melt-mixing a composition raw material comprising the modified EVOH resin and a titanium compound.

[8] A method for producing the multilayer structure according to [6], the method comprising melt-molding a layer comprising the modified EVOH resin composition.

EFFECTS OF THE DISCLOSURE

The modified EVOH resin composition according to the present disclosure allows thermal degradation to be suppressed during heating in melt kneading, melt molding, and the like.

EMBODIMENTS OF THE DISCLOSURE

Hereinafter the present disclosure will be described more specifically based on exemplary embodiments of the present disclosure. However, the present disclosure is not limited to these embodiments.

In the present disclosure, the expression "X to Y" (X and Y are given numbers) is intended to encompass "preferably greater than X" or "preferably less than Y" unless otherwise specified, in addition to the meaning of "X or more and Y or less".

Further, the expression "X or more" (X is a given number) or "Y or less" (Y is a given number) is intended to encompass the meaning "preferably more than X" or "preferably less than Y".

In the present disclosure, the expression "x and/or y" (x and y are each a given configuration or component) is intended to mean the following three meanings: only x; only y; and x and y.

<EVOH Resin Composition>

A modified EVOH resin composition according to an embodiment of the present disclosure (hereinafter referred to as "present modified EVOH resin composition") contains a modified EVOH resin having a primary hydroxyl group structural unit in a side chain, as a main component, and a particular minute amount of a titanium compound.

Specifically, the present modified EVOH resin composition includes a modified EVOH resin as a base resin. The content of the modified EVOH resin in the present modified EVOH resin composition is typically 70% by mass or more, preferably 80% by mass or more, more preferably 90% by mass or more, and particularly preferably 95% by mass or more.

Each component will be described below.

[Modified EVOH Resin]

The modified EVOH resin composition has a primary hydroxyl group in a side chain. Specifically, a modified EVOH resin having a structural unit represented by the following general formula (1) is preferred.

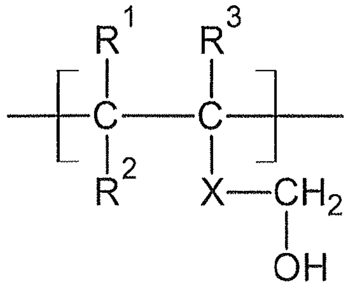

. . . (1)

where $R^1$ to $R^3$ each independently represent a hydrogen bond or an organic group, and X represents a single bond or a bonding chain.

In the above general formula (1), $R^1$ to $R^3$ are not limited as long as they are each a hydrogen atom or an organic group. Examples of the organic group include hydrocarbon groups such as alkyl, alkenyl, alkynyl, phenyl, and naphthyl groups (these hydrocarbon groups may have hydroxyl, fluorine, chlorine, and bromine as substituents).

Examples of the bonding chain (X) bonding the polymer main chain and the primary hydroxyl group structure include, but not limited to, hydrocarbons such as alkylene, alkenylene, alkynylene, phenylene, and naphthylene (these hydrocarbons may have hydroxyl, fluorine, chlorine, and bromine as substituents), hydrocarbons having ether bonds for bonding to the polymer main chain, such as oxyalkylene, oxyalkenylene, oxyalkynylene, oxyphenylene, and oxynaphthylene (these hydrocarbons may have hydroxyl, fluorine, chlorine, and bromine as substituents), $-CO-$, $-CO(CH_2)_mCO-$, $-CO(CH_2)_mCOR^4-$, $-NR^5-$, and $-CONR^5-$ (where $R^4$ and $R^5$ are independently any substituent, preferably a hydrogen atom or an alkyl group, and m represents a natural number).

Examples of the method for obtaining the modified EVOH resin include:

(I) a method in which a monomer having a primary hydroxyl group structural unit in a side chain or a monomer having a side-chain primary hydroxyl group structural unit protected with an ester or the like is copolymerized with ethylene and a vinyl ester monomer, and the resulting copolymer is deprotected, for example, by saponification; and
(II) a method in which a copolymer of ethylene and a vinyl ester monomer is saponified to produce an EVOH resin, and then the EVOH resin is post-modified to produce a primary hydroxyl group structural unit in a side chain. Among these methods, the method (I) is preferred in terms of productivity.

Hereinafter, the method for producing a modified EVOH resin will be described.

First of all, in the case of the method (I), ethylene, a vinyl ester monomer, and a monomer having a primary hydroxyl group structural unit in a side chain or a monomer having the hydroxyl group structural unit protected with an ester or the like may be copolymerized.

Examples of the vinyl ester monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate, and vinyl trifluoroacetate. Among these, vinyl acetate is preferred in terms of cost efficiency.

Examples of the monomer having a primary hydroxyl group structural unit in a side chain in the method (I) include monohydroxyalkyl group-containing monomers such as allyl alcohol, 3-butene-1-ol, 4-penten-1-ol, 5-hexen-1-ol, 6-hepten-1-ol, and methallyl alcohol; and dihydroxyalkyl group-containing monomers such as 2-methylene-1,3-propanediol, 3,4-diol-1-butene, 4,5-diol-1-pentene, 4,5-diol-3-methyl-1-pentene, 5,6-diol-1-hexene, and glycerol monoaryl ether. These may be used alone or in combination of two or more.

Examples of the monomer having a side-chain primary hydroxyl group structural unit protected with an ester or the like (which hereinafter may be referred to as "monomer having a hydroxyl group structural unit protected with an ester or the like") in the method (I) include acetates of the monomer having a primary hydroxyl group structural unit in a side chain. Specific examples include monoacetoxyalkyl group-containing monomers such as allyl acetate, 3-butenyl acetate, 4-pentenyl acetate, 5-hexenyl acetate, 6-heptenyl acetate, and methallyl acetate; and diacetoxyalkyl group-containing monomers such as 2-methylene-1,3-propanediol diacetate, 3,4-diacetoxy-1-butene, 4,5-diacetoxy-1-pentene, 4,5-diacetoxy-3-methyl-1-pentene, 5,6-diacetoxy-1-hexene, and 3-allyloxy-1,2-propanediol diacetate. These may be used alone or in combination of two or more.

In the method (I), the monomer having a primary hydroxyl group structural unit in a side chain and the monomer having a hydroxyl group structural unit protected with an ester or the like can be used in combination and copolymerized with ethylene and a vinyl ester monomer.

Among these, in terms of productivity, the monomer having a hydroxyl group structural unit protected with an ester or the like is preferred. Diacetoxyalkyl group-containing monomers are more preferred, 3,4-diacetoxy-1-butene and 2-methylene-1,3-propanediol diacetate are more preferred, and 3,4-diacetoxy-1-butene are particularly preferred.

Further, a copolymerizable ethylenically unsaturated monomer may be copolymerized in a range that does not impair the effects of the present disclosure.

Examples of such an ethylenically unsaturated monomer include olefins such as propylene, 1-butene, and isobutene; unsaturated acids such as acrylic acid, methacrylic acid, crotonic acid, phthalic acid (anhydride), maleic acid (anhydride), and itaconic acid (anhydride), salts of these acids, and mono- or dialkyl esters of these acids, the one or two alkyl groups each having 1 to 18 carbon atoms; acrylamide, N-alkylmethacrylamides in which the alkyl has 1 to 18 carbon atoms, N,N-dimethylacrylamide, 2-acrylamidopropanesulfonic acid and salts thereof; acrylamide analogues such as acrylamidopropyldimethylamine and acid salts or quaternary salts thereof; methacrylamide and methacrylamide analogues such as N-alkylmethacrylamides in which the alkyl has 1 to 18 carbon atoms, N,N-dimethylmethacrylamide, 2-methacrylamidopropanesulfonic acid and salts thereof; N-vinylamides such as N-vinylpyrrolidone, N-vinylformamide, and N-vinylacetamide; vinyl cyanide compounds such as acrylonitrile and methacrylonitrile; vinyl ethers such as alkyl vinyl ethers in which the alkyl has 1 to 18 carbon atoms, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; and vinyl silane compounds. These may be used alone or in combination of two or more.

In a copolymerization reaction of these monomers, any known method such as bulk polymerization, solution polymerization, suspension polymerization, dispersion polymerization, or emulsion polymerization can be employed. Among these, solution polymerization with ease of copolymerization control is suitable.

When such copolymerization is performed by solution polymerization, examples of the solvent used include lower alcohols with 1 to 5 carbon atoms such as methanol, ethanol, propanol, 2-propanol, and butanol, and ketones such as acetone and 2-butanone. These may be used alone or in combination of two or more. Among these, methanol is suitable because of the ease of polymerization reaction control. Further, 2-propanol is suitable when a copolymer with a low degree of polymerization is synthesized.

The amount of the solvent used can be selected as appropriate in consideration of the degree of polymerization of the modified EVOH resin of interest and the chain transfer constant of the solvent. When the solvent is methanol or 2-propanol, S (solvent)/M (monomer) is preferably 0.01 to 10 (weight ratio), more preferably 0.05 to 7 (weight ratio).

As a method of charging the copolymerization components in solution polymerization, for example, any method such as initial batch charge, charge in portions, and continuous charge such as the Hanna method considering the monomer reactive ratio can be employed.

A polymerization initiator is used in the copolymerization. Examples of the polymerization initiator include azo initiators such as 2,2'-azobisisobutyronitrile, 2,2'-azobis(2,4-dimethylvaleronitrile), and 2,2'-azobis(4-methoxy-2,4-dimethylvaleronitrile), and peroxide initiators such as acetyl peroxide, benzoyl peroxide, lauryl peroxide, t-butyl peroxy neodecanoate, 1,1,3,3-tetramethylbutyl peroxy neodecanoate, diisopropyl peroxydicarbonate, and di-2-ethylhexyl peroxydicarbonate.

The amount of a polymerization catalyst used, which may vary with the kind of polymerization catalyst, is selected as desired depending on the polymerization rate. For example, 2,2'-azobisisobutyronitrile or t-butyl peroxy neodecanoate is used in the amount of typically 10 to 2000 ppm, preferably 50 to 1000 ppm with respect to the vinyl ester monomer.

It is preferable that the polymerization temperature for copolymerization is selected from the range of 40°C to the boiling point, depending on the solvent used and ethylene pressure.

Further, the copolymerization may be performed in the presence of a chain transfer agent in a range that does not impair the effects of the present disclosure. Examples of the chain transfer agent include aldehydes such as acetaldehyde, propionaldehyde, and crotonaldehyde; and mercaptans such as 2-hydroxyethanethiol. These may be used alone or in combination of two or more. Among these, aldehydes are suitable. The amount of the chain transfer agent added during copolymerization is determined depending on the chain transfer constant of the chain transfer agent and the degree of polymerization of the modified EVOH resin of interest, but typically 0.1 to 10 parts by mass per 100 parts by mass of the vinyl ester monomer is preferred.

The thus obtained ethylene-vinyl ester copolymer is saponified to obtain the modified EVOH resin.

Any known method can be employed as the saponification method. For example, the resulting ethylene-vinyl ester copolymer dissolved in alcohol or hydrous alcohol is saponified using a saponification catalyst.

Examples of the alcohol include lower alcohols with 1 to 5 carbon atoms, such as methanol, ethanol, and propanol. These may be used alone or in combination of two or more. Among these, methanol is preferred.

The concentration of the ethylene-vinyl ester copolymer in alcohol is selected as appropriate depending on viscosity, typically 5 to 60% by mass.

Examples of the saponification catalyst include alkali catalysts such as alkali metal hydroxides and alcoholates, such as sodium hydroxide, potassium hydroxide, sodium methylate, sodium ethylate, potassium methylate, and potassium ethylate; and acid catalysts such as sulfuric acid, hydrochloric acid, nitric acid, metasulfonic acid, zeolite, and cation exchange resin.

The temperature for saponification is not limited but preferably in the range of 20 to 140°C. With the progress of saponification, a particulate product is generated, indicating the progress of the reaction. If a gel-like product is deposited,

the product can be pulverized. The generated particulate product can be washed and dried to obtain the modified EVOH resin.

Further, in order to increase the degree of saponification, the generated particulate product may be washed and then dispersed in alcohol again, and an alkaline catalyst may be added to allow a reaction to proceed further.

The vinyl ester unit in the ethylene-vinyl ester copolymer is converted into a vinyl alcohol unit by the saponification.

When the monomer having a hydroxyl group structural unit protected with an ester or the like is copolymerized, the ester or the like of the protected monomer is deprotected simultaneously and converted into a side-chain primary hydroxyl group structure.

When 3,4-diacetoxy-1-butene is used as a copolymerization component in the method (I), the modified EVOH resin resulting from deprotection by saponification or the like has a primary hydroxyl group in a side chain as represented by the following general formula (2).

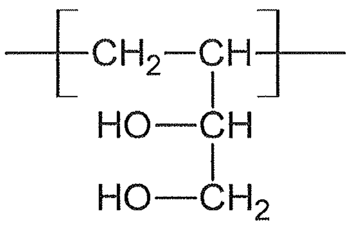

· · · (2)

When 2-methylene-1,3-propanediol diacetate is used as a copolymerization component in the method (I), the resulting modified EVOH resin has a primary hydroxyl group in a side chain as represented by the following general formula (3).

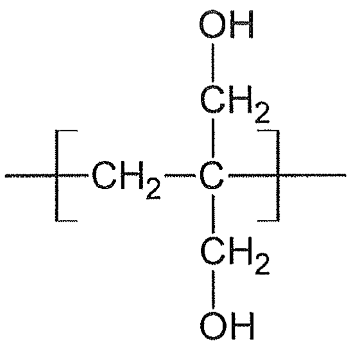

· · · (3)

When the modified EVOH resin is produced by the method (II), for example, ethylene, the vinyl ester monomer listed in the method (I), and if necessary, the copolymerizable ethylenically unsaturated monomer listed in the method (I), may be copolymerized in accordance with the method (I) to produce an EVOH resin, and the resulting EVOH resin may be reacted with a monovalent epoxy group-containing compound. The reaction method is not limited, but examples of preferred methods include a method in which the reaction proceeds in a solution and a method in which the reaction proceeds in an extruder. When the method in which the reaction proceeds in an extruder is employed, it is also preferable to use a catalyst containing ions of a metal belonging to Groups 3 to 12 in the periodic table.

Examples of the monovalent epoxy group-containing compound include propylene oxide, butylene oxide, and glycidol. These may be used alone or in combination of two or more. Among these, propylene oxide is preferred.

When propylene oxide is used as the monovalent epoxy group-containing compound, the resulting modified EVOH resin has a primary hydroxyl group structural unit represented by the following general formula (4) in a side chain.

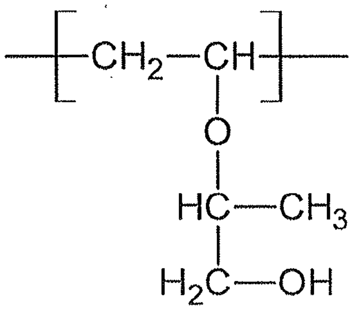

. . . (4)

With such a method (I) or (II), the modified EVOH resin having the structural unit represented by the following general formula (1) can be obtained. The modified EVOH resin may have another hydroxyl group structure (secondary hydroxyl group or tertiary hydroxyl group) in a side chain as long as it has a primary hydroxyl group structural unit in a side chain. The EVOH resin may not be completely deprotected and may contain a small amount of ester residue.

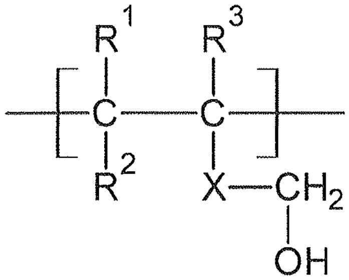

. . . (1)

where $R^1$ to $R^3$ each independently represent a hydrogen bond or an organic group, and X represents a single bond or a bonding chain.

In the above general formula (1), $R^1$ to $R^3$ are not limited as long as they are each a hydrogen atom or an organic group. Examples of the organic group include hydrocarbon groups such as alkyl, alkenyl, alkynyl, phenyl, and naphthyl groups (these hydrocarbons may have hydroxyl, fluorine, chlorine, and bromine as substituents).

Examples of the bonding chain (X) bonding the polymer main chain and the primary hydroxyl group structure include, but not limited to, hydrocarbons such as alkylene, alkenylene, alkynylene, phenylene, and naphthylene (these hydrocarbons may have hydroxyl, fluorine, chlorine, and bromine as substituents), hydrocarbons having ether bonds for bonding to the polymer main chain, such as oxyalkylene, oxyalkenylene, oxyalkynylene, oxyphenylene, and oxynaphthylene (these hydrocarbons may have hydroxyl, fluorine, chlorine, and bromine as substituents), -CO-, $-CO(CH_2)_mCO-$, $-CO(CH_2)_mCOR^4-$, $-NR^5-$, and $-CONR^5-$ (where $R^4$ and $R^5$ are independently any substituent, preferably a hydrogen atom or an alkyl group, and m represents a natural number).

The ethylene structural unit content in the modified EVOH resin is typically 20 to 60 mol%, preferably 25 to 50 mol%, and particularly preferably 25 to 35 mol%. The ethylene structural unit content can be controlled by the pressure of ethylene when the vinyl ester monomer and ethylene are copolymerized. If the content is too low, the gas barrier properties in high humidity and the melt moldability tend to be reduced. Conversely, if too high, gas barrier properties tend to be reduced.

It is noted that the ethylene structural unit content can be measured in conformity with ISO14663.

The modification rate of the primary hydroxyl group structural unit in a side chain in the modified EVOH resin is preferably 0.1 to 30 mol%, more preferably 0.5 to 10 mol%, and particularly preferably 1 to 5 mol%.

If the modification rate of the primary hydroxyl group structural unit is too low, the hydrophilicity of the modified EVOH resin tends to be insufficient, leading to low biodegradability. On the other hand, if the modification rate of the primary hydroxyl group structural unit is too high, the production cost tends to increase, which is economically disadvantageous.

In the case of the method (I), the modification rate of the primary hydroxyl group structural unit can be controlled by the charge amount of the monomer having a primary hydroxyl group structural unit in a side chain or the monomer having a hydroxyl group structural unit protected with an ester or the like, which is used as a copolymerizable monomer. In the method (II), the modification rate can be controlled by the amount of the monovalent epoxy group-containing compound used in the modification.

The melt flow rate (MFR) [at 210°C with a load of 2160 g] of the modified EVOH resin is typically 0.1 to 100 g/10 minutes, preferably 1 to 50 g/10 minutes, and particularly preferably 3 to 35 g/10 minutes. If the MFR is too high, the thickness control in melt molding tends to be difficult. If too low, the load on a molding device tends to be high during melt

molding.

The MFR serves an indicator of the degree of polymerization of the modified EVOH resin and can be adjusted by the amount of polymerization catalyst and/or the amount of solvent when the copolymerization components are copolymerized.

The degree of saponification in the modified EVOH resin is typically 90 mol% or more, preferably 95 mol% or more, and particularly preferably 99 mol% or more. If the degree of saponification is too low, the gas barrier properties tend to be reduced.

[Titanium Compound]

Examples of the titanium compound include inorganic titanium compounds and organic titanium compounds. The titanium compounds may be used alone or in combination of two or more. Among these, inorganic titanium compounds are preferred.

Examples of the inorganic titanium compounds include titanium oxides, titanium hydroxides, titanium chlorides, and inorganic salts of titanium.

Examples of the titanium oxides include titanium(II) oxide, titanium(III) oxide, titanium(IV) oxide, and titanium suboxide.

Examples of the titanium hydroxides include titanous hydroxide and titanic hydroxide.

Examples of the titanium chlorides include titanous chloride and titanic chloride.

Examples of the inorganic salts of titanium include titanium phosphate and titanium sulfate.

Among these, titanium oxides are preferred, titanium(IV) oxide is more preferred, and rutile titanium(IV) oxide is particularly preferred.

Examples of the organic titanium compounds include titanium carboxylates such as titanium acetate, titanium butyrate, and titanium stearate.

It is noted that the titanium compound may be present as a titanium compound in the present modified EVOH resin composition, or may be present in an ionized form or in a complex form interacting with the modified EVOH resin or other ligands.

The titanium compound has an average particle diameter of typically 0.001 to 100 μm, preferably 0.01 to 50 μm, and more preferably 0.015 to 20 μm. When the average particle diameter of the titanium compound is within the above range, the coloring suppressing effect tends to be excellent.

The amount of the titanium compound on a metal basis is 0.001 ppm or more and less than 5 ppm per mass of the modified EVOH resin composition. The amount of the titanium compound on a metal basis is preferably 0.01 to 3 ppm, more preferably 0.03 to 1 ppm, and particularly preferably 0.05 to 0.5 ppm. When the amount of the titanium compound is within the above range, thermal degradation during melt molding can be suppressed. If the amount of the titanium compound is too small, thermal degradation easily occurs. If too large, thermal decomposition of the EVOH resin easily occurs to cause coloring.

The amount of the titanium compound on a metal basis can be determined by ICP mass spectrometry, in which the present modified EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 from Agilent Technologies).

In general, modified EVOH resins are degraded by heat. This is presumably because heat degrades the modified EVOH resin to produce a radical, the radical causes dehydration of the hydroxyl group in the modified EVOH resin to generate a double bond in the main chain of the modified EVOH resin, and this site serves as a reaction starting point to further promote dehydration, resulting in a conjugated polyene structure in the main chain of the modified EVOH resin.

By contrast, since the present modified EVOH resin composition contains a particular minute amount of titanium compound, thermal degradation of the modified EVOH resin is suppressed.

Usually, when a modified EVOH resin composition contains a titanium compound, the modified EVOH resin composition may be colored because of titanium ions. It is therefore common in the art that those skilled in the art would avoid the use of a titanium compound. However, in the present disclosure, to the contrary of such common knowledge, it has been found that the use of a particular minute amount of titanium compound results in a modified EVOH resin composition that allows thermal degradation to be suppressed.

More specifically, titanium is stable as a tetravalent ion and, even in a minute amount, coordinates to the double bond in the main chain of the modified EVOH resin as described above to be chelated and stabilized. Presumably, this suppresses the formation of a polyene structure.

On the other hand, if the amount of the titanium compound is too large, thermal decomposition of the modified EVOH resin due to the titanium compound may occur.

[Other Thermoplastic Resins]

The present modified EVOH resin composition can contain a thermoplastic resin(s) other than the modified EVOH resin in a range that does not impair the effects of the present disclosure (for example, typically 30% by mass or less, preferably 20% by mass or less, particularly preferably 10% by mass or less of the present modified EVOH resin composition).

Known thermoplastic resins can be used as other thermoplastic resin(s). Examples include EVOH resins, polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

The present modified EVOH resin composition may contain additives that are typically blended with EVOH resins in a range that does not impair the effects of the present disclosure. Examples of the additives that can be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, and fatty acid esters and metal salts thereof, polyvalent phenols such as gallic acid and hydroxyl-containing phenolic aldehyde resins, terpene compounds, blends of tertiary hydrogencontaining resins and transition metals (e.g. combination of polypropylene and cobalt), blends of carbon-carbon unsaturated bond-containing resins and transition metals (e.g. combination of polybutadiene and cobalt), photo-oxidative degradable resins (e.g. polyketone), anthraquinone polymers (e.g. polyvinylanthraquinone), and polymer oxygen absorbers obtained by adding photoinitiators (e.g. benzophenone), other antioxidants, and deodorants (e.g. activated carbon) to these blends], heat stabilizers, photostabilizers, UV absorbers, colorants, antistatic agents, surfactants (except those used as lubricants), antimicrobial agents, antiblocking agents, and fillers (e.g. inorganic fillers). These compounds can be used alone or in combination of two or more.

[Method for Producing Modified EVOH Resin Composition]

The present modified EVOH resin composition can be produced, for example, by mixing the modified EVOH resin and the titanium compound by any known method, for example, dry blending method, melt mixing method, solution mixing method, or impregnation method. Among these, it is preferable that the present modified EVOH resin composition is produced by a method including a step of melt-mixing a composition raw material containing the modified EVOH resin and the titanium compound. These production methods may be combined as appropriate.

An example of the dry blending method is a method (i) in which pellets of the modified EVOH resin (A) and the titanium compound are dry-blended by using a tumbler or the like.

Examples of the melt mixing method include a method (ii) in which pellets of the modified EVOH resin and the titanium compound are dry-blended and the resulting dry blend is melt-kneaded, and a method (iii) in which the titanium compound is added to and melt-kneaded with the EVOH resin in a molten state.

Examples of the solution mixing method include a method (iv) in which the titanium compound is added to a solution prepared by using pellets of a commercially available modified EVOH resin, and the resulting solution is solidified, and then the solids are separated from liquid by known means and dried, and a method (v) in which the titanium compound is added to an ethylene-vinyl ester copolymer solution before saponification or a homogeneous solution (water/alcohol solution or the like) of the EVOH resin in the production process of the modified EVOH resin, and the resulting solution is solidified, and then the solids are separated from liquid by known means and dried.

An example of the impregnation method is a method (vi) in which pellets of the modified EVOH resin are brought into contact with an aqueous solution containing the titanium compound so that the titanium compound is incorporated into the modified EVOH resin, and then the resulting pellets are dried.

As the aqueous solution containing the titanium compound, an aqueous solution of the titanium compound or an elution of titanium ions obtained by immersing the titanium compound in water containing various chemicals can be used.

In the impregnation method, the amount of the titanium compound (on a metal basis) can be controlled by the concentration of the titanium compound in the aqueous solution in which the modified EVOH resin is immersed, the immersion temperature, the immersion time, and the like.

The immersion time is typically 0.5 to 48 hours, preferably 1 to 36 hours, and the immersion temperature is typically 10 to 40°C, preferably 20 to 35°C.

Various drying methods can be employed as the drying method in the above production methods. Either stationary drying or fluidized drying can be employed. These may be combined.

As previously mentioned, in the present disclosure, the above different methods can be combined. Among these,

the melt mixing method is preferred, and especially the method (ii) is preferred, in terms of productivity and obtaining a resin composition with more significant effects of the present disclosure. Further, when the other thermoplastic resin(s) and other additives are used, they can be blended by an ordinary method in accordance with the above production method.

The present modified EVOH resin composition thus obtained by the above production methods can have any shape but preferably are pellets.

The pellets may each have, for example, a spherical shape, oval shape, cylindrical shape, cubic shape, square prism shape, or the like. Typically the pellets have the oval shape or the cylindrical shape. The oval pellets each have a minor diameter of typically 1 to 10 mm, preferably 2 to 6 mm, and even more preferably 2.5 to 5.5 mm, and a major diameter of typically 1.5 to 30 mm, preferably 3 to 20 mm, and even more preferably 3.5 to 10 mm in view of convenience when the pellets are used as a molding material later. The cylindrical pellets each have a bottom diameter of typically 1 to 6 mm, preferably 2 to 5 mm, and a length of typically 1 to 6 mm, preferably 2 to 5 mm.

It is preferable that the pellets of the modified EVOH resin used in the above production methods have similar shape and size.

The present modified EVOH resin composition can suppress thermal degradation during heating. The 5% weight loss temperature of the present modified EVOH resin composition is typically 371°C or higher, preferably 372°C or higher, and particularly preferably 373°C or higher.

The 10% weight loss temperature of the present modified EVOH resin composition is typically 383°C or higher and preferably 384°C or higher.

The higher the upper limit of the 5% weight loss temperature or the 10% weight loss temperature, the better, but the upper limit is typically 450°C.

The difference of 1°C in weight loss temperature is very significant because the difference appears as a significant difference in yield in the actual production.

The 5% weight loss temperature and the 10% weight loss temperature mean the temperature at which the weight is reduced to 95% of the weight before measurement (5% weight loss temperature) and the temperature at which the weight is reduced to 90% of the weight before measurement (10% weight loss temperature), for 5 mg of the present modified EVOH resin composition, using a thermogravimeter (Pyris 1 TGA available from Perkin Elmer, Inc.) under a nitrogen atmosphere at a gas flow rate of 20 mL/min and a temperature increase rate of 10 °C/min, and in a temperature range of 30 to 550°C.

The present modified EVOH resin composition has a water content of typically 0.01 to 0.5% by mass, preferably 0.05 to 0.35% by mass, and particularly preferably 0.1 to 0.3% by mass.

The water content of the present modified EVOH resin composition is measured and calculated by the following method.

The mass before drying ($W_1$) of the present modified EVOH resin composition is measured by an electronic balance, and then the present EVOH resin composition is dried at 150°C for five hours in a hot air dryer and cooled for 30 minutes in a desiccator. The mass after cooling ($W_2$) is measured, and the water content is calculated by the following expression.

$$\text{Water content (\% by mass)} = [(W_1 - W_2)/W_1] \times 100$$

Further, when the present modified EVOH resin composition is in the pellet shape, it is preferable to attach a known lubricant to the surfaces of the pellets in order to stabilize the feedability during melt molding. Examples of the lubricant include higher fatty acids having 12 or more carbon atoms (e.g. lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g. saturated higher fatty acid amides such as lauric acid amide, myristic acid amide, palmitic acid amide, stearic acid amide, and behenic acid amide; unsaturated higher fatty acid amides such as oleamide and erucamide, and bis-higher fatty acid amides such as ethylenebisstearamide, ethylenebisoleamide, ethylenebiserucamide, and ethylenebislauramide), low molecular weight polyolefins (e.g. low molecular weight polyethylene with a molecular weight of about 500 to 10000, or low molecular weight polypropylene, or acid modified products thereof), higher alcohols with 6 or more carbon atoms, ester oligomers, and ethylene fluoride resins. These compounds can be used alone or in combination of two or more. The lubricant content is typically 5% by mass or less of the present modified EVOH resin composition, preferably 1% by mass or less. The lower limit is typically 0% by mass.

The thus obtained present modified EVOH resin composition is prepared in various forms such as pellets, powder, and liquid and provided as a molding material for various molded articles. In particular, in the present disclosure, it is preferable that the present modified EVOH resin composition is provided as a material for melt molding, because if so, the effects of the present disclosure can be achieved more efficiently.

It is noted that the present modified EVOH resin composition includes a resin composition obtained by mixing a resin other than the modified EVOH resin used in the present modified EVOH resin composition.

Examples of the molded article include a monolayer film molded from the present modified EVOH resin composition and a multilayer structure having a layer made of the present modified EVOH resin composition.

[Multilayer Structure]

A multilayer structure according to an embodiment of the present disclosure (hereinafter referred to as "the present multilayer structure") includes a layer made of the present modified EVOH resin composition. A layer made of the present modified EVOH resin composition (hereinafter simply referred to as "present modified EVOH resin composition layer") can be laminated with other base material(s) mainly composed of a thermoplastic resin other than the present modified EVOH resin composition (hereinafter the resin used in the base material may be shortly referred to as "base material resin") to impart additional strength, protect the present modified EVOH resin composition layer from moisture or other effects, and impart another function.

Examples of the base material resin include (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof), polyolefin resins in a broader sense including modified olefin resins such as unsaturated carboxyl-modified polyolefin resins obtained by graft-modifying any of the aforementioned polyolefin resins with an unsaturated carboxylic acid or an unsaturated carboxylic acid ester, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic and aliphatic polyketones. These can be used alone or in combination of two or more.

Among these, the polyamide resins, the polyolefin resins, the polyester resins, and the polystyrene resins, which are hydrophobic resins, are preferred. The polyolefin resins such as the polyethylene resins, the polypropylene resins, the polycycloolefin resins, and the unsaturated carboxyl-modified polyolefin resins obtained by modifying these polyolefin resins are more preferred.

When the present modified EVOH resin composition layer is "a" (a1, a2, ...) and the base material resin layer is "b" (b1, b2, ...), the layered configuration of the present multilayer structure may be any combination, such as a/b, b/a/b, a/b/a, a1/a2/b, a/b1/b2, b2/b1/a/b1/b2, or b2/b1/a/b1/a/b1/b2. When the present multilayer structure includes a recycle layer R containing a mixture of the present modified EVOH resin composition and a thermoplastic resin(s) other than the present modified EVOH resin composition, which is obtained by re-melt-molding discards or defectives occurring in the process of producing the present multilayer structure, the layered configuration may be a combination such as b/R/a, b/R/a/b, b/R/a/R/b, b/a/R/a/b, or b/R/a/R/a/R/b. The total number of layers in the present multilayer structure is typically 2 to 15, preferably 3 to 10. In the above layered configurations, an adhesive resin layer containing an adhesive resin may be interposed between individual layers, if necessary.

A known adhesive resin can be used as the adhesive resin. The adhesive resin can be selected as appropriate depending on the kind of thermoplastic resin used in the base material resin layer "b". Typical examples include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present modified EVOH resin composition layer and the base material resin layer, it is preferable to use an adhesive resin having excellent hydrophobicity, because the adhesive resin layer is situated on both sides of the present modified EVOH resin composition layer.

The base material resin and the adhesive resin may contain plasticizer, filler, clay (such as montmorillonite), colorant, antioxidant, antistatic agent, lubricant, nucleating agent, antiblocking agent, wax, and the like as conventionally known, in a range that does not impair the spirit of the present disclosure (for example, 30% by mass or less, preferably 10% by mass or less of the entire resin). These can be used alone or in combination of two or more.

The lamination of the present modified EVOH resin composition layer and the base material resin layer (including the case where the adhesive resin layer is interposed) can be performed by a known method. Examples of the laminating method include: a method in which a film or a sheet of the present modified EVOH resin composition is laminated with the

base material resin by melt extrusion; a method in which the base material resin layer is laminated with the present modified EVOH resin composition by melt extrusion; a method in which the present modified EVOH resin composition and the base material resin are co-extruded; a method in which the present modified EVOH resin composition (layer) and the base material resin (layer) are dry-laminated using a known adhesive agent such as organic titanium compound, isocyanate compound, polyester compound, or polyurethane compound; and a method in which a solution of the present modified EVOH resin composition is applied on the base material resin, and then the solvent is removed. Among these methods, in consideration of cost and environment, a method including a step of melt-molding the present modified EVOH resin composition layer is preferred. Specifically, coextrusion is preferred.

The present multilayer structure may undergo a (heat) stretching process, if necessary. The stretching process may be either uniaxial stretching or biaxial stretching. The biaxial stretching may be either simultaneous stretching or sequential stretching. As a stretching method, a method with a high stretch ratio can be employed among roll stretching, tenter stretching, tubular stretching, stretch blow, and vacuum pressure forming methods. The stretching temperature is selected from a range of about typically 40 to 170°C, preferably 60 to 160°C, which is a temperature near the melting point of the multilayer structure. If the stretching temperature is too low, the stretchability is poor. If too high, it is difficult to maintain a stable stretch state.

Further, the present multilayer structure after the stretching process may be subjected to heat setting for the purpose of imparting dimension stability. The heat setting can be performed by known means. For example, the stretched present multilayer structure is subjected to thermal treatment with a tension state being kept, typically at 80 to 180°C, preferably 100 to 165°C, typically for about 2 to 600 seconds.

When the stretched present multilayer structure is used as a shrinkable film, for example, a cold-setting process for imparting a heat-shrinkable property may be performed by applying cold air to the stretched present multilayer structure, without performing the heat setting.

The thickness of the present multilayer structure (including the stretched multilayer structure) and the thicknesses of the present modified EVOH resin composition layer, the base material resin layer, and the adhesive resin layer that constitute the multilayer structure may vary with the layered configuration, the kind of base material resin, the kind of adhesive resin, intended use, packaging form, required physical properties, and the like, but the thickness of the present multilayer structure (including the stretched multilayer structure) is typically 10 to 5000 μm, preferably 30 to 3000 μm, and particularly preferably 50 to 2000 μm. The thickness of the present modified EVOH resin composition layer is typically 1 to 500 μm, preferably 3 to 300 μm, and particularly preferably 5 to 200 μm. The thickness of the base material resin layer is typically 5 to 3000 μm, preferably 10 to 2000 μm, and particularly preferably 20 to 1000 μm. The thickness of the adhesive resin layer is typically 0.5 to 250 μm, preferably 1 to 150 μm, and particularly preferably 3 to 100 μm.

Further, the thickness ratio of the present modified EVOH resin composition layer to the base material resin layer in the present multilayer structure (present modified EVOH resin composition layer/base material resin layer) is typically 1/99 to 50/50, preferably 5/95 to 45/55, and particularly preferably 10/90 to 40/60, where if these layers each include a plurality of layers, the thickness ratio is the ratio between the thickest one of the present modified EVOH resin composition layers and the thickest one of the base material resin layers). Further, the thickness ratio of the present modified EVOH resin composition layer to the adhesive resin layer in the present multilayer structure (present modified EVOH resin composition layer/adhesive resin layer) is typically 10/90 to 99/1, preferably 20/80 to 95/5, and particularly preferably 50/50 to 90/10, where if these layers each include a plurality of layers, the thickness ratio is the ratio between the thickest one of the present modified EVOH resin composition layers and the thickest one of the adhesive resin layers).

A cup or tray-shaped multilayer container may be produced from the present multilayer structure. In this case, a drawing process is typically employed. Specific examples include a vacuum forming method, pressure forming method, vacuum pressure forming method, and plug-assisted vacuum pressure forming method. When a tube or bottle-shaped multilayer container (laminate structure) is produced from a multilayer parison (a hollow tubular preform before blowing), a blow molding process is employed. Specific examples include an extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, injection inline type biaxial stretching blow molding method, etc.). The resulting laminate may be subjected to heating process, cooling process, rolling process, printing process, dry laminating process, solution or melt coating process, bag forming process, deep drawing process, box forming process, tube forming process, splitting process, or the like, if necessary.

Monolayer films produced from the present modified EVOH resin composition, and bags, cups, trays, tubes, bottles, and other containers, and caps produced from the present multilayer structure are useful as various packaging material containers for general foods, condiments such as mayonnaise and dressing, fermented foods such as miso, fat and oil foods such as salad oil, beverages, cosmetics, and pharmaceutical products.

EXAMPLES

Hereinafter, the present disclosure will be described more specifically with reference to examples. However, the present disclosure is not limited to the following examples.
In the examples, "parts" means parts on a mass basis unless otherwise specified.

<Example 1>

Pellets of a modified EVOH resin, specifically, a side-chain 1,2-diol-containing EVOH resin (ethylene structural unit content of 38 mol%, modification rate of the primary hydroxyl group structural unit of 1.5 mol%, degree of saponification of 99.6 mol%, MFR of 4.0 g/10 minutes (at 210°C with a load of 2160 g)) were used as the modified EVOH resin having a primary hydroxyl group structural unit in a side chain.
Titanium oxide (from FUJIFILM Wako Pure Chemical Corporation) was used as the titanium compound.
A mixture was prepared by dry-blending the titanium oxide in the amount of 0.1 ppm on a metal basis per mass of the modified EVOH resin composition with the pellets of the modified EVOH resin composition.
The mixture was fed to a twin-screw extruder (20 mm in diameter) with a two-hole die, and a strand extruded and ejected under the following extrusion conditions was cooled by air and solidified on a conveyor belt. Then, the solidified strand was cut to produce pellets of a modified EVOH resin composition.

[Extrusion Conditions]

Extruder setting temperature (°C): C1/C2/C3/C4/C5/C6

= 150/200/210/210/210/210

<Example 2>

Pellets of a modified EVOH resin composition was obtained in the same way as in Example 1 except that the amount of titanium oxide on a metal basis was changed to 1 ppm per mass of the modified EVOH resin composition in Example 1.

<Comparative Example 1>

Pellets of a modified EVOH resin composition was obtained in the same way as in Example 1 except that titanium oxide was not used in Example 1.

<Comparative Example 2>

Pellets of a modified EVOH resin composition was obtained in the same way as in Example 1 except that the amount of titanium oxide on a metal basis was changed to 10 ppm per mass of the modified EVOH resin composition in Example 1.
The resulting pellets of the modified EVOH resin compositions in Examples 1 and 2 and Comparative Examples 1 and 2 were evaluated for thermal stability as described below. The results are listed in Table 1 below.

[Thermal Stability Evaluation]

The temperature at which the weight was reduced to 95% of the weight before measurement (5% weight loss temperature) and the temperature at which the weight was reduced to 90% of the weight before measurement (10% weight loss temperature) were measured for 5 mg of the resulting pellets of the present modified EVOH resin composition, using a thermogravimeter (Pyris 1 TGA available from Perkin Elmer, Inc.) under a nitrogen atmosphere at a gas flow rate of 20 mL/min and a temperature increase rate of 10 °C/min in a temperature range of 30 to 550°C. The higher the weight loss temperature, the higher the thermal stability.

Table 1

| | Amount of titanium compound on metal basis (ppm) | Thermal stability evaluation | |
|---|---|---|---|
| | | 5% weight loss temperature (°C) | 10% weight loss temperature (°C) |
| Example 1 | 0.1 | 374 | 385 |
| Example 2 | 1 | 372 | 385 |
| Comparative Example 1 | 0 | 354 | 371 |
| Comparative Example 2 | 10 | 370 | 382 |

Table 1 indicates that, compared to the modified EVOH resin composition containing no titanium compound in Comparative Example 1 and the modified EVOH resin composition containing a titanium compound in an amount that exceeds a particular range in Comparative Example 2, the modified EVOH resin compositions containing a particular minute amount of titanium compound in Examples 1 and 2 have a higher weight loss temperature and have excellent thermal stability. Further, multilayer structures having layers made of the modified EVOH resin compositions of Examples 1 and 2 also have thermal degradation suppressed and have excellent thermal stability.

While specific forms of the embodiments of the present disclosure have been shown in the above examples, the examples are merely illustrative but not limitative. It is contemplated that various modifications apparent to those skilled in the art could be made within the scope of the present disclosure.

INDUSTRIAL APPLICABILITY

The present modified EVOH resin composition allows thermal degradation to be suppressed during heating and therefore is useful for various packaging materials for various foods, condiments such as mayonnaise and dressing, fermented foods such as miso, fat and oil foods such as salad oil, beverages, cosmetics, and pharmaceutical products.

## Claims

1. A modified ethylene-vinyl alcohol copolymer composition comprising: a modified ethylene-vinyl alcohol copolymer having a primary hydroxyl group structural unit in a side chain; and a titanium compound, wherein the amount of the titanium compound on a metal basis is 0.001 ppm or more and less than 5 ppm per mass of the modified ethylene-vinyl alcohol copolymer composition.

2. The modified ethylene-vinyl alcohol copolymer composition according to claim 1, wherein the modified ethylene-vinyl alcohol copolymer has an ethylene structural unit content of 20 to 60 mol%.

3. The modified ethylene-vinyl alcohol copolymer composition according to claim 1 or 2, wherein a modification rate of the primary hydroxyl group structural unit in a side chain in the modified ethylene-vinyl alcohol copolymer is 0.1 to 30 mol%.

4. The modified ethylene-vinyl alcohol copolymer composition according to any one of claims 1 to 3, wherein the primary hydroxyl group structural unit in a side chain in the modified ethylene-vinyl alcohol copolymer is represented by the following general formula (1):

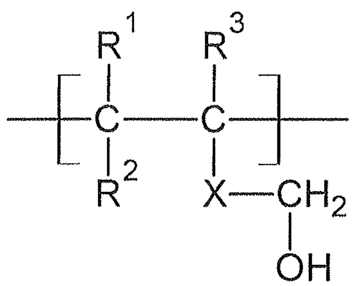

. . . (1)

where $R^1$ to $R^3$ each independently represent a hydrogen bond or an organic group, and X represents a single bond or a bonding chain.

**5.** Pellets comprising the modified ethylene-vinyl alcohol copolymer composition according to any one of claims 1 to 4.

**6.** A multilayer structure comprising at least one layer comprising the modified ethylene-vinyl alcohol copolymer composition according to any one of claims 1 to 4.

**7.** A method for producing the modified ethylene-vinyl alcohol copolymer composition according to any one of claims 1 to 4, the method comprising melt-mixing a composition raw material comprising the modified ethylene-vinyl alcohol copolymer and the titanium compound.

**8.** A method for producing the multilayer structure according to claim 6, the method comprising melt-molding a layer comprising the modified ethylene-vinyl alcohol copolymer composition.

**INTERNATIONAL SEARCH REPORT**

International application No.
**PCT/JP2023/013065**

**A. CLASSIFICATION OF SUBJECT MATTER**

***C08L 29/04***(2006.01)i; ***B32B 27/28***(2006.01)i; ***C08K 3/22***(2006.01)i; ***C08L 23/08***(2006.01)i
FI: C08L29/04 S; C08K3/22; B32B27/28 102; C08L23/08

According to International Patent Classification (IPC) or to both national classification and IPC

**B. FIELDS SEARCHED**

Minimum documentation searched (classification system followed by classification symbols)

C08L29/04; B32B27/28; C08K3/22; C08L23/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 8-319318 A (KURARAY CO LTD) 03 December 1996 (1996-12-03) claim 1, paragraphs [0005], [0016], [0038], table 2 | 1-8 |
| Y | JP 2004-75866 A (NIPPON SYNTHETIC CHEM IND CO LTD) 11 March 2004 (2004-03-11) claim 1, paragraphs [0002]-[0004], [0007], [0037], examples | 1-8 |
| Y | JP 2004-359965 A (NIPPON SYNTHETIC CHEM IND CO LTD) 24 December 2004 (2004-12-24) claims 1, 13, paragraphs [0004], [0033], examples | 1-8 |
| Y | JP 2019-163378 A (MITSUBISHI CHEM CORP) 26 September 2019 (2019-09-26) paragraph [0070], examples 2, 3, table 1 | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/013065**

| Patent document cited in search report | Publication date (day/month/year) | Patent family member(s) | Publication date (day/month/year) |
|---|---|---|---|
| JP 8-319318 A | 03 December 1996 | (Family: none) | |
| JP 2004-75866 A | 11 March 2004 | (Family: none) | |
| JP 2004-359965 A | 24 December 2004 | (Family: none) | |
| JP 2019-163378 A | 26 September 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004359965 A